# FASCICULE DE BREVET EUROPEEN

(11) **EP 2 424 773 B1**
(45) Date de publication et mention de la délivrance du brevet: **05.06.2013**
(21) Numéro de dépôt: 10723688.7
(22) Date de dépôt: 16.04.2010
(51) Int. Cl.: B62H 3/00, B25H 1/00

(54) **DISPOSITIF D'IMMOBILISATION EN POSITION VERTICALE D'UNE MOTOCYCLETTE**
VORRICHTUNG ZUM SPERREN EINES MOTORRADS IN VERTIKALER POSITION
DEVICE FOR IMMOBILISING A MOTORCYCLE IN A VERTICAL POSITION

(30) Priorité: 30.04.2009 FR 0952903
(43) Date de publication de la demande: 07.03.2012
(73) Titulaire: Gefco, 92402 Courbevoie (FR)
(72) Inventeur: GRECO, Pablo Andres, Buenos Aires 1427 (AR)
(74) Mandataire: Fernandez, Francis Lionel
(86) Numéro de dépôt international: PCT/FR2010/050735
(87) Numéro de publication internationale: WO 2010/125280

(56) Documents cités:
- WO-A-94/22708
- WO-A-03/089290
- WO-A-2007/093968
- DE-U1- 29 706 585
- FR-A- 2 636 587

## Description

La présente invention se rapport à un dispositif d'immobilisation d'une motocyclette en position verticale permettant son transport.

La commercialisation des motocyclettes nécessite leurs acheminement depuis l'unité de production jusqu'aux points de vente. Ces points de vente peuvent être très éloignés des pays de production. Un tel transport demande des moyens permettant à la fois d'immobiliser rapidement les motocyclettes en position verticale et d'éviter que celles-ci ne bougent lors du transport.

Comme présenté dans le document US2008/0073881, le transport des motocyclettes peut être effectué en positionnant les roues de la motocyclette dans un rail, ce rail comportant des moyens permettant de maintenir la motocyclette immobile, en position vertical, dans ce rail. La motocyclette et le rail forment ainsi un ensemble rigide simplifiant son transport. La fixation de la motocyclette en position vertical sur le rail est réalisée par l'intermédiaire d'un bras monté pivotant suivant l'axe longitudinal de la motocyclette est monté rigide suivant son axe latéral, venant se fixer sur les reposes pieds de la motocyclette. Une butée positionnée en appui derrière la roue arrière de la motocyclette limite son déplacement longitudinal le long du rail. Pour qu'un tel montage soit efficace il faut adapter la position de la butée arrière à la dimension de la motocyclette, évitant que celle-ci ne roule le long du rail à chaque changement d'allure du véhicule transportant cet ensemble. Pour un même transporteur convoyant différents types de motocyclettes, l'ajustement de la butée arrière doit être modifié à chaque fois, ralentissant les opérations de chargement des motocyclettes dans le convoyeur, faisant qu'une telle solution n'est pas optimum.

L'objet de l'invention concerne un dispositif d'immobilisation d'une motocyclette en position verticale permettant un positionnement rapide, s'adaptant automatiquement à une certaine plage de dimensionnement des motocyclettes.
FR2636587, qui est considéré comme étant l'état de la technique le plus proche de l'objet de la revendication 1, décrit un dispositif d'immobilisation d'une motocyclette en position verticale, pour son transport sur une surface de chargement, comportant des moyens de blocage en translation et des moyens de fixation de la motocyclette, solidaires de ladite surface de chargement, dans lequel lesdits moyens de fixation sont aptes à coopérer avec des moyens d'ancrage solidaires de la motocyclette et, dans lequel lesdits moyens de blocage sont aptes à prendre appui sur l'avant d'une roue arrière de la motocyclette.

A cet effet, l'invention a pour objet un dispositif d'immobilisation d'une motocyclette en position verticale, pour son transport sur une surface de chargement, comportant des moyens de blocage en translation et des moyens de fixation de la motocyclette, solidaires de ladite surface de chargement, dans lequel lesdits moyens de fixation sont aptes à coopérer avec des moyens d'ancrage solidaires de la motocyclette et, dans lequel lesdits moyens de blocage sont aptes à prendre appui sur l'avant d'une roue arrière de la motocyclette. Les moyens de blocage et les moyens de fixation sont sensiblement alignés suivant un axe longitudinal de la surface de chargement de la motocyclette.

La surface de chargement comporte une première traverse et une deuxième traverse alignées suivant un axe transversal orthogonal à l'axe longitudinal, les moyens de blocage étant positionnés sur la première traverse et les moyens de fixation étant positionnés sur la seconde traverse, les moyens de blocage et les moyens de fixation pouvant occuper différentes positions le long de la première traverse et de la seconde traverse, permettant de s'adapter à différents dimensionnement de la surface de transport et au nombre de motocyclettes devant être transportées.

La première traverse et la deuxième traverse présentent des moyens de solidarisation avec deux barres longitudinales solidaires de la surface de chargement, alignées suivant l'axe longitudinal. Les deux barres longitudinales présentent un profil en forme de U, les moyens de solidarisation étant constitués de doigts rétractables venant pénétrer dans les profils en forme de U des barres longitudinales, permettant de déplacer les traverses dans différentes positions stables suivant l'axe longitudinal.

Les moyens de blocage sont constitués d'un rail s'étendant suivant la direction longitudinale, le rail étant articulé à une de ces extrémités avec la première traverse, pour présenter une première et une deuxième position stable : une première position dans laquelle il repose sur la surface de chargement, permettant le passage de la motocyclette sur ledit rail et une deuxième position dans laquelle il est incliné pour prendre appui sur l'avant d'une roue arrière de la motocyclette. Un moyen formant cale, tel qu'un loquet, solidaire de la première traverse, est apte à être inséré entre la première traverse et le rail définissant ainsi la deuxième position inclinée.

Les moyens de fixation sont articulés sur la deuxième traverse suivant un axe de rotation orienté suivant l'axe transversal, présentant une première et une deuxième position stable : une première position dans laquelle il repose sur la surface de chargement, permettant le passage de la motocyclette sur le moyen de fixation, et une deuxième position relevée pour maintenir la motocyclette dans une position verticale. Les moyens de fixation comportent une fourche, ladite fourche présente deux bras aptes à prendre appui sur ladite surface de chargement dans la deuxième position relevée des moyens de fixation. Les deux bras sont prolongés par deux chapes servant d'appui, dans la deuxième position relevée des moyens de fixation, pour des moyens d'ancrages appartenant à la motocyclette tels que des reposes pieds. La seconde traverse comporte un rail présentant deux parties latérales, lesdites parties latérales servant de support à l'axe de rotation des moyens de fixation, l'axe de rotation étant positionné du même coté du plan que les moyens de blocage, même coté que les moyens de blocage par rapport audit plan, faisant que le poids de la motocyclette, une fois celle-ci positionnée en appui sur les moyens de fixation, participe au maintien en position stable relevé des moyens de fixation. La fourche comporte une barre reliant les deux bras et deux plaques verticales fixées sur ladite barre, lesdites plaques servant de support à l'axe de rotation des moyens de fixation.

La présente invention concerne aussi un véhicule de transport comportant un dispositif d'immobilisation selon l'une quelconque des caractéristiques précédentes.

D'autres avantages et caractéristiques techniques de la présente invention apparaîtront plus clairement à la lumière de la description qui suit en référence aux figures des dessins annexés parmi lesquelles :
- La figure 1, représente un ensemble de fixations pour le transport de motocyclettes selon l'invention ;
- La figure 2, représente une vue de détail de l'élément de blocage ;
- La figure 3, représente une vue de détail de l'élément de fixation ; et
- La figure 4, représente une vue latérale de l'élément de fixation.

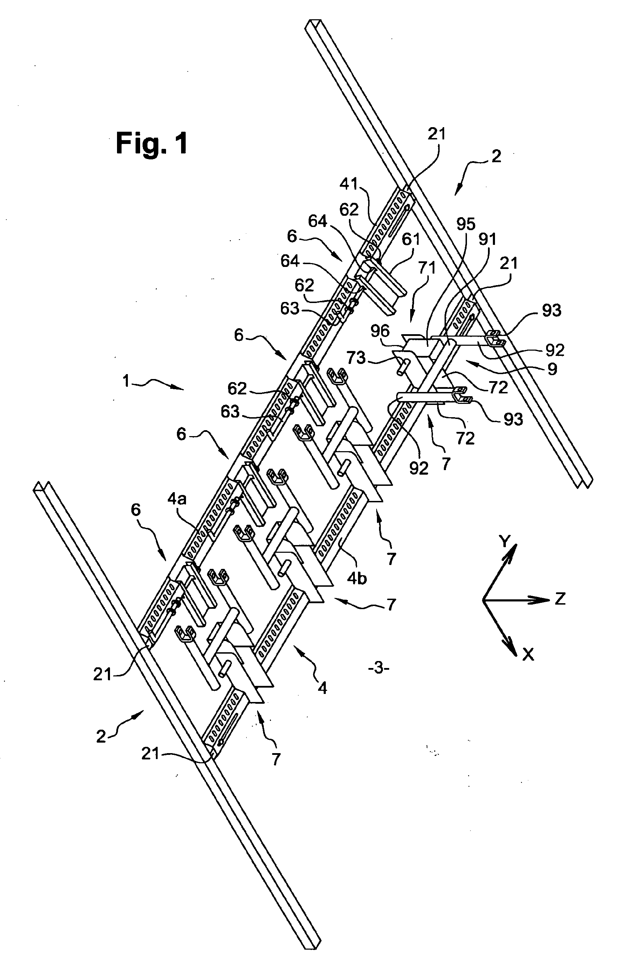

Les figures 1 à 3 représentent un ensemble de fixations 1 pour le transport de motocyclettes 8 selon l'invention. Cet ensemble de fixations 1 comporte deux barres longitudinales 2, positionnées parallèlement entre elles, alignées suivant un axe longitudinal X, fixées le long de la surface de chargement 3 du camion ou du conteneur servant au transport de motocyclettes 8. Les barres longitudinales 2 présentent des profils en U, formant deux rails fixes, servant à bloquer en position des traverses 4 positionnées transversales suivant un axe transversal Y. Les traverses 4 comportent à chacune de leurs extrémités des éléments de fixation rétractables 21, formant des doigts, venant pénétrer dans les profils en U des barres longitudinales 2. Les traverses 4 sont positionnées deux par deux, avec une première traverse 4a recevant des moyens de blocage 6, une seconde traverse 4b recevant des éléments de fixation 7, permettant de fixer les motocyclettes 8 en position verticale, comme expliqué ultérieurement. Suivant la largeur de la surface de chargement 3, il est possible de disposer plusieurs motocyclettes 8 côte à côte. De même, en fonction de la longueur de la surface de chargement, il est possible de disposer plusieurs rangées de motocyclettes 8 (une seule rangée étant représentée dans la figure 1).

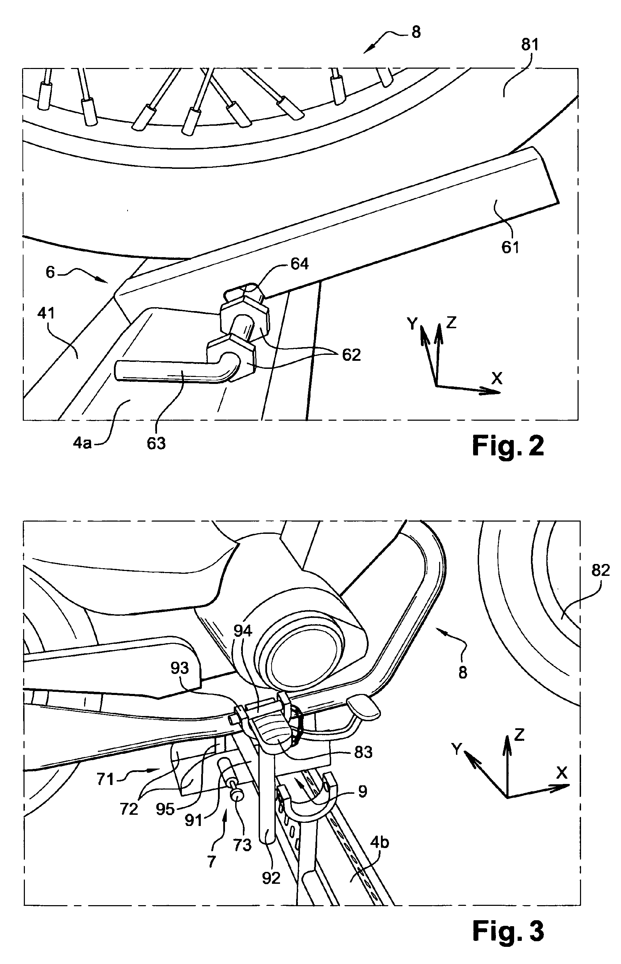

L'élément de blocage 6, vu en détail en figure 2, est constitué d'un premier rail 61, disposé longitudinalement suivant l'axe X, fixé par une charnière 62 sur un bord 41 de la traverse 4a. Le bord 41 est disposé du coté opposé à la seconde traverse 4b. Dans une première position abaissée le premier rail 61 vient se poser sur la première traverse 4a. La partie de la traverse 4a positionnée sous le rail 61 présente une hauteur abaissée, permettant au rail 61 d'être proche de la surface de chargement 3 permettant, comme expliqué ultérieurement, de faciliter le passage de la motocyclette 8 sur ce rail 61. Le premier rail 61 peut présenter une seconde position relevée maintenu par un loquet 63 monté coulissant le long de la traverse 4a, venant se positionner sous le rail 61. Des encoches 64 pratiquées sous le premier rail 61, permettent le passage du loquet 63, le dimensionnement des ces encoches 64 déterminant l'inclinaison du premier rail 61.

L'élément de fixation 7, vu en détail à la figure 3, positionné sur la seconde traverse 4b, comporte un second rail 71 aligné, suivant l'axe transversal X, avec le premier rail 61 de l'élément de blocage 6. Ce second rail 71 est positionné de manière fixe sur la seconde traverse 4b. Comme pour la première traverse 4a, à l'emplacement du second rail 71, la seconde traverse 4b présente une hauteur abaissée, facilitant, de même que pour le prier rail 61, le passage de la motocyclette 8. Le second rail 71 présente deux parois latérales 72, ces parois latérales 72 présentent un espacement suffisant pour permettre le passage des roues avant 82 et arrière 81 de la motocyclette 8. Une fourche 9 est fixée aux deux parois latérales 72 du second rail 71 par deux liaisons pivots 96. Cette fourche 9 peut présenter une première position horizontale, venant se positionner contre la surface de chargement 3, permettant le passage sans effort de la motocyclette 8 sur cette fourche 9 et une seconde position verticale, avec un loquet 73, fixé sur une des parois latérales 72 du second rail 71, venant bloquer cette fourche 9 dans cette seconde position. Le loquet 73 présente un ressort de rappel lui permettant de venir bloquer automatiquement la fourche 9 lors de son basculement dans la seconde position verticale et demandant d'être déplacé manuellement pour libérer la fourche 9, lui permettant de rebasculer dans la première position horizontale. La fourche 9 comporte une partie tubulaire formant un H, composée d'une barre 91, s'étendant transversalement suivant l'axe Y, reliant deux bras 92. Les bras 92, dans la seconde position verticale de la fourche 9, présentent un positionnement vertical, prenant appui sur la surface de chargement 3. Ces bras 92 sont prolongés par deux chapes 93, orientées dans la même direction que les bras 92. Les extrémités libres des chapes 93 comportent des ouvertures, permettant le passage de goupilles 94 venant fermer les ouvertures formées par ces chapes 93.

Sur les figures 2 et 3, la motocyclette 8 est représentée fixée verticalement sur l'élément de blocage 6 et sur l'élément de fixation 7. La motocyclette 8 comporte deux reposes pieds 83 positionnés de manière fixe de chaque coté de la motocyclette 8. Les Chapes 93 de la fourche 9 sont positionnées de telle sorte à servir d'appui à ces reposes pieds 83, maintenant la motocyclette 8 légèrement surélevée, répartissant le poids de la motocyclette 8 sur la fourche 9 et sur la roue arrière 81 positionnée le long du premier rail 61 préalablement relevé en position inclinée, en appui sur le loquet 63. Les goupilles 94 une fois positionnées bloquent les reposes pieds 83 dans les chapes 93. Le positionnement de la roue arrière 81 le long du premier rail 61 en position inclinée crée une force de rappel repoussant la motocyclette 8 en l'arrière, agissant comme une calle. Ce recul de la motocyclette 8 est empêché par le loquet 73 bloquant la fourche 8 en position verticale. La motocyclette 8 ainsi positionnée en équilibre entre ces deux forces risque moins de présenter d'incessants déplacements d'avant en arrière lors du déplacement du camion ou du conteneur lors de son transport. De tels déplacements d'avant en arrière créent des chocs dans les éléments de fixation de la motocyclette 8, accélérant l'usure de ces éléments de fixation, risquant à terme de se casser. Un tel montage permet aussi des variations d'empattements des motocyclettes 8 transportées. Ainsi, en fonction de l'empattement de la motocyclette 8 mise en position, la roue arrière 81 présente différentes positions le long du premier rail 61, créant toujours la même force de rappel vers l'arrière, ne modifiant pas les conditions de transport de la motocyclette 8. Bien entendu les traverses 4 peuvent aussi être facilement déplacées le long des barres longitudinales 2, permettant de s'adapter à une modification importante du dimensionnement de l'ensemble des motocyclettes 8 positionnées côte à côte. De même, dans le cas du transport d'une motocyclette très lourde, la traverse 4 sera positionnée pour que la roue arrière 81 de la motocyclette vienne uniquement se caller contre le premier rail 61 sans remonter le long de celui-ci.

Lors de la mise en place de la motocyclette 8 pour le transport, la fourche 8 et le premier rail 61 sont préalablement positionnés horizontalement. La motocyclette 8 est avancée, faisant passer la roue avant 82 le long du premier rail 61, de la fourche 8 et du second rail 71. Avant que la roue arrière 81 ne se présente sur le premier rail 61, le premier rail 61 est amené en position inclinée. Le loquet 63 est déplacé latéralement venant se positionner sous le premier rail 61, le maintenant en position inclinée. La fourche 9 est partiellement relevée, présentant les chapes 93 face aux reposes pieds 83. En continuant l'avançant de la motocyclette 8, les reposes pieds 83 viennent se positionner au fond des chapes 93, entrainant le basculement en position verticale de la fourche 9.

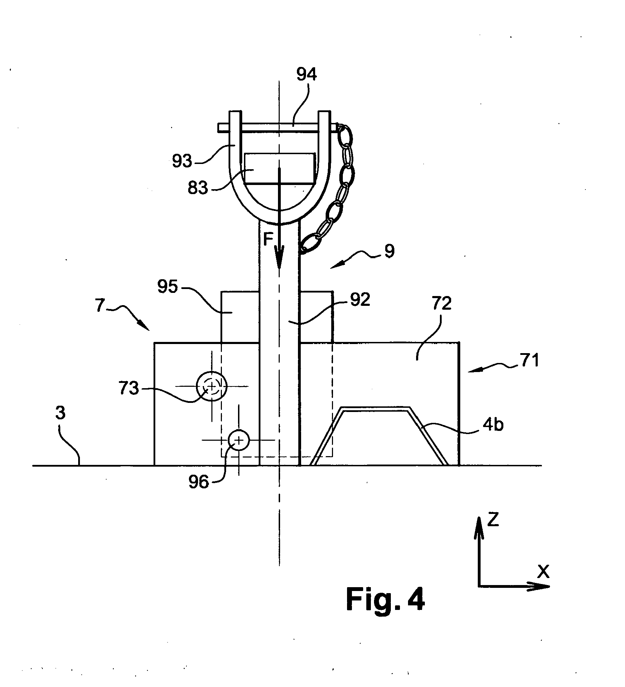

La figure 4 représente une vue latérale de l'élément de fixation 7, avec la fourche 9 en position verticale. Un décalage suivant l'axe longitudinal X, de l'axe de rotation des deux liaisons pivots 96 par rapport au positionnement des points de contact de la fourche 9 sur la surface de chargement 3 fait, qu'une fois un certain angle de pivotement de la fourche 9 atteint, le poids de la motocyclette 8 aide au basculement de la fourche 9. Le poids de la motocyclette 8 est représenté par la force F dont la résultante est positionnée au centre de symétrie du repose pied 83. Ce décalage soulage aussi le travail du loquet 73, le poids de la motocyclette 8 aidant à maintenir la fourche 9 en position verticale. Cette force F entraine aussi le basculement final de la fourche 9 en position verticale, faisant avancer la motocyclette 8 lors de la fin de son positionnement, aidant notamment la roue arrière 81 à rouler long du premier rail 61 disposé préalablement en position inclinée.

Il est notamment possible de prévoir des moyens de réglages de la hauteur de la fourche 9, permettant de s'adapter sur d'autres types de motocyclettes. Dans cet objectif il est aussi possible de remplacer les reposes pieds 83 servant d'appuis fixes par d'autres types d'appuis fixes, pouvant être éventuellement positionnés uniquement pour le transport.

## Revendications

1. Dispositif d'immobilisation d'une motocyclette (8) en position verticale, pour son transport sur une surface de chargement (3), comportant des moyens de blocage (6) en translation et des moyens de fixation (7) de la motocyclette, solidaires de ladite surface de chargement (3), dans lequel lesdits moyens de fixation (7) sont aptes à coopérer avec des moyens d'ancrage (83) solidaires de la motocyclette (8) et, dans lequel lesdits moyens de blocage (6) sont aptes à prendre appui sur l'avant d'une roue arrière (81) de la motocyclette (8), les moyens de blocage (6) et les moyens de fixation (7) étant adaptés pour dans une première position, dans laquelle les moyens de blocage (6) et les moyens de fixation (7) reposent sur la surface de chargement (3), guider le passage d'une roue avant de la motocyclette (8) lors du chargement de ladite motocyclette sur ledit dispositif.

2. Dispositif d'immobilisation selon la revendication 1, **caractérisé en ce que** les moyens de blocage (6) et les moyens de fixation (7) sont sensiblement alignés suivant un axe longitudinal (X) de la surface de chargement (3) de la motocyclette (8).

3. Dispositif d'immobilisation selon la revendication 2, **caractérisé en ce que** ladite surface de chargement (3) comporte une première traverse (4a) et une deuxième traverse (4b) alignées suivant un axe transversal (Y) orthogonal à l'axe longitudinal (X), les moyens de blocage (6) étant positionnés sur la première traverse (4a) et les moyens de fixation (7) étant positionnés sur la seconde traverse (4b), les moyens de blocage (6) et les moyens de fixation (7) pouvant occuper différentes positions le long de la première traverse (4a) et de la seconde traverse (4b).

4. Dispositif d'immobilisation selon la revendication 3, **caractérisé en ce que** la première traverse (4a) et la deuxième traverse (4b) présentent des moyens de solidarisation avec deux barres longitudinales (2) solidaires de la surface de chargement (3), alignées suivant l'axe longitudinal (X).

5. Dispositif d'immobilisation selon la revendication 4, **caractérisé en ce que** les deux barres longitudinales (2) présentent un profil en forme de U, les moyens de solidarisation étant constitués de doigts rétractables (21) venant pénétrer dans les profils en forme de U des barres longitudinales (2), permettant de déplacer les traverses (4) dans différentes positions stables suivant l'axe longitudinal (X).

6. Dispositif d'immobilisation selon l'une quelconque des revendications 3 à 5, **caractérisé en ce que** les moyens de blocage (6) sont constitués d'un rail (61) s'étendant suivant la direction longitudinale (X).

7. Dispositif d'immobilisation selon la revendication 6, caractérisé en ce quel le rail (61) des moyens de blocage (6) est articulé à une de ses extrémités avec la première traverse (4a), pour présenter une première et une deuxième positions stables : une première position dans laquelle il repose sur la surface de chargement (3), permettant le passage de la motocyclette (9) sur ledit rail (61) et une deuxième position dans laquelle il est incliné pour prendre appui sur l'avant d'une roue arrière (81) de la motocyclette (8).

8. Dispositif d'immobilisation selon la revendication 7, **caractérisé en ce qu'**il comporte un moyen formant cale (63) solidaire de la première traverse (4a) et apte à être inséré entre la première traverse (4a) et le rail (61) des moyens de blocage (6) définissant ainsi la deuxième position inclinée.

9. Dispositif d'immobilisation selon l'une quelconque des revendications 3 à 8, **caractérisé en ce que** les moyens de fixation (7) sont articulés sur la deuxième traverse (4b) suivant un axe de rotation orienté suivant l'axe transversal (Y), présentant une première et une deuxième positions stables : une première position dans laquelle il repose sur la surface de chargement (3), permettant le passage de la motocyclette (8) sur le moyen de fixation (7), et une deuxième position relevée pour maintenir la motocyclette (8) dans une position verticale.

10. Dispositif d'immobilisation selon la revendication 9, **caractérisé en ce que** les moyens de fixation (7) comportent une fourche (9), ladite fourche (9) présentant deux bras (92) aptes à prendre appui sur ladite surface de chargement (3) dans la deuxième position relevée des moyens de fixation (7).

11. Dispositif d'immobilisation selon la revendication 10, **caractérisé en ce que** les deux bras (92) sont prolongés par deux chapes (93) servant d'appui, dans la deuxième position relevée des moyens de fixation (7), pour des moyens d'ancrages (83) appartenant à la motocyclette (8) tels que des reposes pieds.

12. Dispositif d'immobilisation selon la revendication 10 ou 11, **caractérisé en ce que** la seconde traverse (4b) comporte un rail (71) présentant deux parties latérales (72), lesdites parties latérales (72) servant de support à l'axe de rotation des moyens de fixation (7), ledit axe de rotation étant positionné à l'extérieur d'un plan contenant les bras (92) de la fourche (9), ledit axe étant positionné du même coté que les moyens de blocage (6) par rapport audit plan.

13. Dispositif d'immobilisation selon la revendication 12 **caractérisé en ce que** la fourche (9) comporte une barre (91) reliant les deux bras (92) et deux plaques (95) verticales fixées sur ladite barre (91), lesdites plaques (95) servant de support à l'axe de rotation des moyens de fixation (7).

14. Véhicule de transport comportant un dispositif d'immobilisation selon l'une quelconque des revendications 1 à 13.

## Patentansprüche

1. Vorrichtung zum Sperren eines Motorrads (8) in vertikaler Position für seinen Transport auf einer Ladefläche (3), die Mittel (6) zum Blockieren in Verschiebung und Befestigungsmittel (7) des Motorrads aufweist, die fest mit der Ladefläche (3) verbunden sind, wobei die Befestigungsmittel (7) geeignet sind, um mit Verankerungsmitteln (83), die fest mit dem Motorrad (8) verbunden sind, zusammenzuwirken, und bei der die Blockierungsmittel (6) geeignet sind, um auf der Vorderseite eines Hinterrads (81) des Motorrads (8) aufzuliegen, wobei die Blockierungsmittel (6) und die Befestigungsmittel (7) angepasst sind, um in einer ersten Position, in der die Blockierungsmittel (6) und die Befestigungsmittel (7) auf der Ladefläche (3) ruhen, die Passage eines Vorderrads des Motorrads (8) bei dem Laden des Motorrads auf die Vorrichtung zu führen.

2. Vorrichtung zum Sperren nach Anspruch 1, **dadurch gekennzeichnet, dass** die Blockierungsmittel (6) und die Befestigungsmittel (7) im Wesentlichen entlang einer Längsachse (X) der Ladefläche (3) des Motorrads (8) gefluchtet sind.

3. Vorrichtung zum Sperren nach Anspruch 2, **dadurch gekennzeichnet, dass** die Ladefläche (3) einen ersten Querträger (4a) und einen zweiten Querträger (4b) aufweist, die entlang einer Querachse (Y) orthogonal zu der Längsachse (X) gefluchtet sind, wobei die Blockierungsmittel (6) auf dem ersten Querträger (4a) positioniert sind und die Befestigungsmittel (7) auf dem zweiten Querträger (4b) positioniert sind, wobei die Blockierungsmittel (6) und die Befestigungsmittel (7) unterschiedliche Positionen entlang des ersten Querträgers (4a) und des zweiten Querträgers (4b) belegen können.

4. Vorrichtung zum Sperren nach Anspruch 3, **dadurch gekennzeichnet, dass** der erste Querträger (4a) und der zweite Querträger (4b) Mittel zum festen Verbinden mit ihren zwei Längsstangen (2), die fest mit der Ladefläche (3) verbunden sind, die entlang der Längsachse (X) gefluchtet sind, aufweisen.

5. Vorrichtung zum Sperren nach Anspruch 4, **dadurch gekennzeichnet, dass** die zwei Längsstangen (2) ein U-förmiges Profil aufweisen, wobei die Mittel zum festen Verbinden aus rückziehbaren Fingern (21) bestehen, die in die U-förmigen Profile der Längsstangen (2) eindringen, was es erlaubt, die Querträger (4) in verschiedene stabile Positionen entlang der Längsachse (X) zu bewegen.

6. Vorrichtung zum Sperren nach einem der Ansprüche 3 bis 5, **dadurch gekennzeichnet, dass** die Blockierungsmittel (6) aus einer Schiene (61) bestehen, die sich entlang der Längsrichtung (X) erstreckt.

7. Vorrichtung zum Sperren nach Anspruch 6, **dadurch gekennzeichnet, dass** die Schiene (61) der Blockierungsmittel (6) an einem ihrer Enden an dem ersten Querträger (4a) angelenkt ist, um eine erste und eine zweite stabile Position aufzuweisen: eine erste Position, in der sie auf der Ladefläche (3) ruht, die das Passieren des Motorrads (9) auf der Schiene (61) erlaubt, und eine zweite Position, in der sie geneigt ist, um auf der Vorderseite eines Hinterrads (81) des Motorrads (8) aufzuliegen.

8. Vorrichtung zum Sperren nach Anspruch 7, **dadurch gekennzeichnet, dass** sie ein Mittel aufweist, das einen Keil (63) bildet, der fest mit dem ersten Querträger (4a) verbunden und geeignet ist, um zwischen den ersten Querträger (4a) und die Schiene (61) der Blockierungsmittel (6) eingefügt zu werden, um dadurch die zweite schräge Position zu definieren.

9. Vorrichtung zum Sperren nach einem der Ansprüche 3 bis 8, **dadurch gekennzeichnet, dass** die Befestigungsmittel (7) auf dem zweiten Querträger (4b) entlang einer Drehachse angelenkt sind, die entlang der Querachse (Y) ausgerichtet ist, die eine erste und eine zweite stabile Position aufweist: eine erste Position, in der sie auf der Ladefläche (3) aufliegt, was das Passieren des Motorrads (8) auf das Befestigungsmittel (7) erlaubt, und eine zweite angehobene Position, um das Motorrad (8) in einer vertikalen Position zu halten.

10. Vorrichtung zum Sperren nach Anspruch 9, **dadurch gekennzeichnet, dass** die Befestigungsmittel (7) eine Gabel (9) aufweisen, wobei die Gabel (9) zwei Arme (92) aufweist, die geeignet sind, um auf der Ladefläche (3) in der zweiten angehobenen Position der Befestigungsmittel (7) aufzuliegen.

11. Vorrichtung zum Sperren nach Anspruch 10, **dadurch gekennzeichnet, dass** die zwei Arme (92) durch zwei Gabelbügel (93) verlängert sind, die in der zweiten angehobenen Position der Befestigungsmittel (7) für Verankerungsmittel (83), die zu dem Motorrad (8) gehören, wie zum Beispiel Fußrasten, als Auflage dienen.

12. Vorrichtung zum Sperren nach Anspruch 10 oder 11, **dadurch gekennzeichnet, dass** der zweite Querträger (4b) eine Schiene (71) aufweist, die zwei seitliche Teile (72) aufweist, wobei die seitlichen Teile (72) der Drehachse der Befestigungsmittel (7) als Träger dienen, wobei die Drehachse außerhalb einer Ebene positioniert ist, die die Arme (92) der Gabel (9) enthält, wobei die Achse auf derselben Seite in Bezug zu der Ebene positioniert ist wie die Blockierungsmittel (6).

13. Vorrichtung zum Sperren nach Anspruch 12, **dadurch gekennzeichnet, dass** die Gabel (9) eine Stange (91) aufweist, die die zwei Arme (92) verbindet, und zwei vertikale Platten (95), die auf der Stange (91) befestigt sind, wobei die Platten (95) der Drehachse der Befestigungsmittel (7) als Träger dienen.

14. Transportfahrzeug, das eine Vorrichtung zum Sperren nach einem der Ansprüche 1 bis 13 aufweist.

## Claims

1. A device for immobilising a motorcycle (8) in a vertical position, for transporting same on a loading surface (3), comprising locking means (6) in translation and fixing means (7) of the motorcycle, integral with the said loading surface (3), in which the said fixing means (7) are able to cooperate with anchoring means (83) integral with the motorcycle (8) and in which the said locking means (6) are able to rest on the front of a rear wheel (81) of the motorcycle (8), the locking means (6) and the fixing means (7) being adapted in a first position, in which the locking means (6) and the fixing means (7) rest on the loading surface (3) for guiding the passage of a front wheel of the motorcycle (8) on loading of the said motorcycle on the said device.

2. The immobilising device according to Claim 1, **characterized in that** the locking means (6) and the fixing means (7) are substantially aligned along a longitudinal axis (X) of the loading surface (3) of the motorcycle (8).

3. The immobilising device according to Claim 2, **characterized in that** the said loading surface (3) comprises a first crossmember (4a) and a second crossmember (4b) aligned along a transverse axis (Y) orthogonal to the longitudinal axis (X), the locking means (6) being positioned on the first crossmember (4a) and the fixing means (7) being positioned on the second crossmember (4b), the locking means (6) and the fixing means (7) being able to occupy different positions along the first crossmember (4a) and the second crossmember (4b).

4. The immobilising device according to Claim 3, **characterized in that** the first crossmember (4a) and the second crossmember (4b) have integrating means with two longitudinal bars (2) integral with the loading surface (3), aligned along the longitudinal axis (X).

5. The immobilising device according to Claim 4, **characterized in that** the two longitudinal bars (2) have a U-shaped profile, the integrating means being constituted by retractable pins (21) coming to penetrate in the U-shaped profiles of the longitudinal bars (2), permitting the displacement of the crossmembers (4) in different stable positions along the longitudinal axis (X).

6. The immobilising device according to any one of Claims 3 to 5, **characterized in that** the locking means (6) are constituted by a rail (61) extending along the longitudinal direction (X).

7. The immobilising device according to Claim 6, **characterized in that** the rail (61) of the locking means (6) is articulated at one of its ends with the first crossmember (4a), to present a first and a second stable position: a first position in which it rests on the loading surface (3), permitting the passage of the motorcycle (9) on the said rail (61), and a second position in which it is inclined, to rest on the front of a rear wheel (81) of the motorcycle (8) .

8. The immobilising device according to Claim 7, **characterized in that** it comprises a means forming a wedge (63) integral with the first crossmember (4a) and able to be inserted between the first crossmember (4a) and the rail (61) of the locking means (6), thus defining the second inclined position.

9. The immobilising device according to any one of Claims 3 to 8, **characterized in that** the fixing means (7) are articulated on the second crossmember (4b) along a rotation axis oriented along the transverse axis (Y), having a first and a second stable position: a first position in which it rests on the loading surface (3), permitting the passage of the motorcycle (8) on the fixing means (7), and a second raised position for keeping the motorcycle (8) in a vertical position.

10. The immobilising device according to Claim 9, **characterized in that** the fixing means (7) comprise a fork (9), the said fork (9) having two arms (92) able to rest on the said loading surface (3) in the second raised position of the fixing means (7).

11. The immobilising device according to Claim 10, **characterized in that** the two arms (92) are extended by two yokes (93) serving as support, in the second raised position of the fixing means (7), for anchoring means (83) belonging to the motorcycle (8) such as foot rests.

12. The immobilising device according to Claim 10 or 11, **characterized in that** the second crossmember (4b) comprises a rail (71) having two lateral parts (72), the said lateral parts (72) serving as a support to the rotation axis of the fixing means (7), the said rotation axis being positioned on the exterior of a plane containing the arms (92) of the fork (9), the said axis being positioned on the same side as the locking means (6) with respect to the said plane.

13. The immobilising device according to Claim 12, **characterized in that** the fork (9) comprises a bar (91) connecting the two arms (92) and two vertical plates (95) fixed on the said bar (91), the said plates (95) serving as a support to the rotation axis of the fixing means (7).

14. A transportation vehicle comprising an immobilising device according to any one of Claims 1 to 13.
